# EUROPÄISCHE PATENTANMELDUNG

(11) **EP 2 735 519 A1**
(43) Veröffentlichungstag der Anmeldung: **28.05.2014**
(21) Anmeldenummer: 12195711.2
(22) Anmeldetag: 05.12.2012
(51) Int. Cl.: B65D 19/38, B65D 71/04

(54) **Warenladungs- und -transportsystem**

(30) Priorität: 26.11.2012 US 201261729752 P
(71) Anmelder: European Packaging Service GmbH, 51371 Leverkusen (DE)
(72) Erfinder: Staps, Jeanette, 40789 Monheim (DE)
(74) Vertreter: Von Kreisler Selting Werner - Partnerschaft von Patentanwälten und Rechtsanwälten mbB

(57) **Zusammenfassung**

Das Warenladungs- und -transportsystem, insbesondere für Gefahrgutfässer für z.B. chemikalische Stoffe, weist eine Tragplatte (38) zur Abstützung von zu transportierender Ware (40) und Pappmaterial aufweisende Winkelleistenelemente (10) zur Anordnung an der Tragplatte (38) abgewandten oberen Außenrändern (41) der Ware (40) auf. Ferner weist das Warenladungs- und - transportsystem Spannbänder (44) zum Spannen um die Tragplatte (38), die Winkelleistenelemente und die zwischen beiden angeordnete Ware (40) auf.

## Beschreibung

Die Erfindung betrifft ein Warenladungs- und -transportsystem, insbesondere für Gefahrgutfässer für z.B. chemische Stoffe.

Warenladungssicherung ist unter dem Gesichtspunkt der Unfall- und Verletzungsgefahrenminderung von Bedeutung. Mangelnde Ladungssicherung ist häufig die Ursache dafür, dass Warenladungen während des Transports und/oder maschineller Handhabung verrutschen und daraus Beschädigungen oder gar Unfälle mit Körperverletzungen resultieren können.

Warenladungssicherungen sind in verschiedenen Ausgestaltungen bekannt. Eine dieser Ausgestaltungen betrifft die formschlüssige Ladungssicherung, für die häufig Kunststoff Verpackungsmaterialien (z.B. Schrumpffolien oder Schaumstoffe) verwendet werden, welche nicht nur teuer, sondern auch wenig umweltfreundlich sind.

Eine andere bekannte Ladungssicherungsvariante ist die kraftschlüssige Ladungssicherung, die durch Niederzurren gewährleistet wird. Hierbei wird die Ladung durch z.B. Zurrgurte zusätzlich gegen die Ladefläche gespannt und somit die Haftreibung erhöht, was die Ladung gegen ein Verrutschen sichert. Um die Waren zu schützen, werden normalerweise zwischen den Waren und den Zurrgurten Paneele eingesetzt. In DE 20 2004 010 558 U1 ist eine formstabile Paneel-Vorrichtung beschrieben. Ein Warenladungs- und Transportsicherungssystem mit sich kreuzenden Streben aus Pappmaterial, die auf die Oberseite von zu sichernden Fässern aufgelegt und verzurrt werden, ist in WO 2009/010022 A1 beschrieben.

Eine Aufgabe der Erfindung ist es, ein Warenladungs- und -transportsystem zu schaffen, das die Warenladungs- und -transportsicherheit auf einfache Art und Weise erhöht.

Zur Lösung dieser Aufgabe wird mit der Erfindung ein Warenladungs- und - transportsystem vorgeschlagen, das insbesondere für Gefahrgutfässer für beispielsweise chemikalische Stoffe geeignet ist, wobei das System versehen ist mit
- einer Tragplatte zur Abstützung von zu transportierender Ware,
- Pappmaterial aufweisenden Winkelleistenelementen zur Anordnung an der Tragplatte abgewandten oberen Außenrändern der Ware und
- Spannbändern zum Spannen um die Tragplatte, die Winkelleistenelemente und die zwischen beiden angeordnete Ware.

Das erfindungsgemäße Warenladungs- und -transportsystem für insbesondere Gefahrgutfässer mit chemischen Stoffen weist als eine Komponente eine Tragplatte zur Abstützung der zu transportierenden Ware auf. Bei dieser Tragplatte handelt es sich im einfachsten Fall um eine Palette o.dgl. Das erfindungsgemäße System umfasst darüber hinaus Spannbänder, um die Ware mit der Tragplatte zu verzurren. Erfindungsgemäß weist das Warenladungs- und - transportsystem ferner Winkelleistenelemente in Form von Winkelleisten auf, die längs der oberen Außenränder der auf der Tragplatte ruhenden Ware angeordnet werden und auf diese Weise eine Art Kanten- und Rutschschutz bieten. Die Spannbänder werden nun über diese Winkelleistenelemente gelegt und um die Tragplatte herumgeführt und dann festgezurrt. Die Innenseiten der Winkelleistenelemente sind dabei vorzugsweise rutschhemmend beschichtet oder mit einer rutschhemmenden Lage versehen.

Um die Haftreibung zwischen den Waren und der Tragplatte zu erhöhen, ist es zweckmäßig, eine Zwischenlage zwischen den Waren und der Tragplatte anzuordnen, wobei mindestens eine der beiden/vorzugsweise beide Seiten der Zwischenlage rutschhemmend beschichtet ist/sind.

Das Winkelleistenelement des erfindungsgemäßen Warenladungs- und -transportsystems ist im Querschnitt betrachtet winkelförmig und weist zwei winklig zueinander verlaufende und miteinander verbundene Schenkel auf. Vorteilhafterweise ist dabei jeder dieser Schenkel versehen mit
- mindestens einer Wabenschicht aus Pappmaterial, die mehrere, nebeneinander angeordnete und im Wesentlichen gewellte Wabenwände aufweist,
- wobei jeweils benachbarte Wabenwände untereinander verbunden sind und zwischen sich Waben bilden, welche zu zwei einander gegenüberliegenden Hauptseiten der Wabenschicht offen sind,
- einer außenliegenden und einer innenliegenden Abdecklage aus Pappmaterial,
- wobei die Abdecklagen auf den Hauptseiten der Wabenschicht angeordnet sind, und
- einer rutschhemmenden Beschichtung, die auf mindestens einer der beiden Abdecklagen angeordnet ist.

Das Winkelleistenelement des erfindungsgemäßen Systems weist mindestens eine sich winkelförmig erstreckende Wabenschicht aus Pappmaterial auf, bei dem es sich z.B. um Recyclingpapier oder Zellulosepapier in unterschiedlichen Stärken (z.B. Pappe, Wellpappe) handeln kann. Diese Wabenschicht weist mehrere, nebeneinander angeordnete, im Wesentlichen gewellte Wabenwände auf. Zur Bildung der Waben sind jeweils benachbarte Wabenwände untereinander verbunden, wobei die Waben zu zwei einander gegenüberliegenden Hauptseiten der Wabenschicht offen sind. Zur Abdeckung der Wabenöffnungen liegen auf diesen eine äußere und eine innere Abdecklage auf, die die Außenseite und die Innenseite des Winkelleistenelements bilden, wobei die Abdecklagen ebenso wie die Wabenschicht unter Verwendung von Pappmaterial hergestellt sind. Um die Haftreibung zwischen dem erfindungsgemäßen Winkelleistenelement und den zu sichernden Waren zu erhöhen, ist eine rutschhemmende Beschichtung auf mindestens einer der beiden Abdecklagen angeordnet. Bei dieser rutschhemmenden Beschichtung kann es sich beispielsweise um eine Gummierung o.dgl. handeln, die bei Produkten aus Pappe (z.B. als Antirutschpappe) an sich bekannt und bereits in der Verpackungsindustrie verwendet wird.

Vorteilhafterweise können beide Abdecklagen auf ihren Außenseiten rutschhemmend beschichtet sein. Die rutschhemmende Beschichtung kann direkt auf der Außenseite der Abdecklage aufgebracht werden. Beispielsweise kann die rutschhemmende Beschichtung durch Auftragen rutschhemmender Stoffe direkt auf der Außenseite der Abdecklage hergestellt sein.

Es ist ferner möglich, dass die rutschhemmende Beschichtung auf einer direkt auf der Außenseite der Abdecklage fixierten Traglage aus Pappmaterial aufgebracht ist. Auch kann eine Gummierungsfolie oder Antirutschpappe beispielsweise direkt auf der Außenseite der Abdecklage aufgeklebt sein.

In vorteilhafter Weiterbildung der Erfindung ist ferner vorgesehen, dass die rutschhemmende Beschichtung wasserdicht ist.

Bei einer weiteren möglichen Ausgestaltung des Winkelleistenelements sind die Seitenränder der Wabenschicht durch Schutzlagen abgedeckt. Vorteilhafterweise kann die Schutzlagen als Überstandslaschen der mindestens einen Abdecklage ausgebildet sein, wobei die Überstandslaschen seitlich von mindestens einer der auf der Außenseite der Abdecklage fixierten Traglagen abstehen. Es ist beispielsweise möglich, dass die Überstandslaschen seitlich von beiden auf den Außenseiten der Abdecklagen fixierten Traglagen abstehen. Die Überstandslaschen können beispielsweise durch Verkleben auf den Seitenrändern befestigt sein. Damit ist die Wabenschicht randseitig geschlossen, wobei die Außenseite des und/oder Innenseite Winkelleistenelements vollständig rutschhemmend beschichtet und die Wabenschicht des gegen Feuchtigkeit geschützt sein kann.

Zur Verstärkung der Stabilität des Winkelleistenelements können vorteilhafterweise mehrere Wabenschicht zwischen den Abdecklagen angeordnet sein. Die Wabenschichten können so aufeinander angeordnet werden, dass die Längsrichtung der Wabenwände einer Wabenschicht quer zur Längsrichtung der Wabenwände einer benachbarten Wabenschicht gerichtet ist. Es ist beispielsweise möglich, dass Zwischenlagen zwischen jeweils benachbarten Wabenschichten angeordnet sind.

Vorzugsweise ist eine nachgiebige Schicht aus Papiermaterial (z.B. Wellpappe) zwischen mindestens einer der Abdecklagen und der rutschhemmender Beschichtung angeordnet. Damit kann sich die rutschhemmende Beschichtung an die Form der zu sichernden Waren anpassen, so dass sich eine möglichst große Kontaktfläche ergibt.

Die Herstellung eines Winkelleistenelements kann zweckmäßigerweise durch Knicken oder Umbiegen eines (streifenförmigen) Plattenelements oder Paneels erfolgen, welches mindestens eine Wabenschicht mit beidseitig der Wabenschicht angeordneten Abdecklagen mit zumindest einer rutschhemmenden Beschichtung auf einer der beiden Abdecklagen aufweist. Mit anderen Worten weist das streifenförmige Plattenelement bzw. Paneel den Schichtaufbau auf, wie er weiter oben anhand des Winkelleistenelements bzw. anhand der beiden Schenkel des Winkelleistenelements beschrieben ist. Zur Vereinfachung des Biegens bzw. Knickens ist es zweckmäßig, wenn das streifenförmige Plattenelement bzw. Paneel eine V-förmige Einkerbung o.dgl. auf zumindest einer seiner Hauptseiten aufweist, wobei sich diese Einkerbung ausreichend tief in das Plattenelement bzw. Paneel erstreckt.

Ferner betrifft die Erfindung ein insbesondere die zuvor genannten Winkelleistenelemente bildendes Plattenelement für ein Warenladungs- und - transportsystem, insbesondere für Gefahrgüter, wie z.B. chemische Stoffe. Die Erfindung betrifft weiter ein Warenladungs- und -transportsystem, das mit dem erfindungsgemäßen Plattenelement versehen ist.

Warenladungssicherung ist unter dem Gesichtspunkt der Unfall- und Verletzungsgefahrenminderung von Bedeutung. Mangelnde Ladungssicherung ist häufig die Ursache dafür, dass Warenladungen während des Transports und/oder maschineller Handhabung verrutschen und daraus Beschädigungen oder gar Unfälle mit Körperverletzungen resultieren können.

Warenladungssicherungen sind in verschiedenen Ausgestaltungen bekannt. Eine dieser Ausgestaltungen betrifft die formschlüssige Ladungssicherung, für die häufig plastische Verpackungsmaterialien (z.B. Schrumpffolien oder Schaumstoffe) verwendet werden, welche nicht nur teuer, sondern auch wenig umweltfreundlich sind.

Eine andere bekannte Ladungssicherungsvariante ist die kraftschlüssige Ladungssicherung, die durch Niederzurren gewährleistet wird. Hierbei wird die Ladung durch z.B. Zurrgurte zusätzlich gegen die Ladefläche gespannt und somit die Haftreibung erhöht, die gegen ein Verrutschen der Ladung sichert. Um die Waren zu schützen, werden normalerweise zwischen den Waren und den Zurrgurten Paneele eingesetzt.

Eine weitere Aufgabe der Erfindung ist es daher, ein Plattenelement für ein Warenladungs- und -transportsystem zu schaffen, das die Warenladungs- und -transportsicherung auf einfache Art und Weise erhöht. Ferner ist es Aufgabe der Erfindung, ein Warenladungs- und -transportsystem mit einem derartigen Plattenelement anzugeben.

Zur Lösung dieser weiteren Aufgabe wird mit der Erfindung ein Plattenelement für ein Warenladungs- und -transportsystem vorgeschlagen, wobei das Plattenelement versehen ist mit
- mindestens einer Wabenschicht aus Papiermaterial, die mehrere, nebeneinander angeordnete, im wesentlichen gewellte Wabenwände aufweist,
- wobei jeweils benachbarte Wabenwände untereinander verbunden sind und zwischen sich Waben bilden, welche zu zwei einander gegenüberliegenden Hauptseiten der Wabenschicht offen sind,
- einer oberen und einer unteren Abdecklage aus Papiermaterial,
- wobei die Abdecklagen auf den Hauptseiten der Wabenschicht angeordnet sind, und
- einer rutschhemmenden Beschichtung, die auf mindestens einer der beiden Abdecklagen angeordnet ist.

Das erfindungsgemäße Plattenelement weist mindestens eine Wabenschicht aus Papiermaterial auf, bei dem es sich z.B. um Recyclingpapier oder Zellulosepapier in unterschiedlichen Stärken (z.B. Pappe, Wellpappe) handeln kann. Diese Wabenschicht weist mehrere, nebeneinander angeordnete, im wesentlichen gewellte Wabenwände auf. Zur Bildung der Waben sind jeweils benachbarte Wabenwände untereinander verbunden, wobei die Waben zu zwei einander gegenüberliegenden Hauptseiten der Wabenschicht offen sind. Zur Abdeckung der Wabenöffnungen sind eine obere und eine untere Abdecklage auf den Hauptseiten der Wabenschicht angeordnet, wobei die Abdecklagen ebenso wie die Wabenschicht unter Verwendung von Papiermaterial hergestellt sind. Um die Haftreibung zwischen dem erfindungsgemäßen Plattenelement und den zu sichernden Waren zu erhöhen, ist eine rutschhemmende Beschichtung auf mindestens einer der beiden Abdecklagen angeordnet. Bei dieser rutschhemmenden Beschichtung kann es sich beispielsweise um eine Gummierung o.dgl. handeln, die bei Produkten aus Papier (z.B. als Antirutschpappe) an sich bekannt und bereits in der Verpackungsindustrie verwendet wird.

Vorteilhafterweise können beide Abdecklagen auf ihren Außenseiten rutschhemmend beschichtet sein. Die rutschhemmende Beschichtung kann direkt auf der Außenseite der Abdecklage aufgebracht werden. Beispielsweise kann die rutschhemmende Beschichtung durch Auftragen rutschhemmender Stoffe direkt auf der Außenseite der Abdecklage hergestellt sein.

Es ist ferner möglich, dass die rutschhemmende Beschichtung auf einer direkt auf der Außenseite der Abdecklage fixierten Traglage aus Papiermaterial aufgebracht ist. Auch kann eine Gummierungsfolie oder Antirutschpappe beispielsweise direkt auf der Außenseite der Abdecklage aufgeklebt sein.

In vorteilhafter Weiterbildung der Erfindung ist ferner vorgesehen, dass die rutschhemmende Beschichtung wasserdicht ist.

Bei einer weiteren möglichen Ausgestaltung des erfindungsgemäßen Plattenelements sind die Seitenränder der Wabenschicht durch Schutzlagen abgedeckt. Vorteilhafterweise kann die Schutzlagen als Überstandslaschen der mindestens einen Abdecklage ausgebildet sein, wobei die Überstandslaschen seitlich von mindestens einer der auf der Außenseite der Abdecklage fixierten Traglagen abstehen. Es ist beispielsweise möglich, dass die Überstandslaschen seitlich von beiden auf den Außenseiten der Abdecklagen fixierten Traglagen abstehen. Die Überstandslaschen können beispielsweise durch Verkleben auf den Seitenrändern befestigt sein. Damit ist die Wabenschicht des Plattenelements allseitig geschlossen, wobei die Außenseite des Plattenelements vollständig rutschhemmend beschichtet und die Wabenschicht des Plattenelements gegen Feuchtigkeit geschützt ist.

Zur Verstärkung der Tragfähigkeit des Plattenelements können vorteilhafterweise mehrere Wabenschicht zwischen den Abdecklagen angeordnet sein. Die Wabenschichten können so aufeinander angeordnet werden, dass die Längsrichtung der Wabenwände einer Wabenschicht quer zur Längsrichtung der Wabenwände einer benachbarten Wabenschicht gerichtet ist. Es ist beispielsweise möglich, dass Zwischenlagen zwischen jeweils benachbarten Wabenschichten angeordnet sind.

Vorzugsweise ist eine nachgiebige Schicht aus Papiermaterial (z.B. Wellpappe) zwischen mindestens einer der Abdecklagen und der rutschhemmender Beschichtung angeordnet. Damit kann sich die rutschhemmende Beschichtung an die Form der zu sichernden Waren anpassen, so dass sich eine möglichst große Kontaktfläche ergibt.

Ferner dient zur Lösung der oben genannten Aufgabe auch ein Warenladungs- und -transportsystem, insbesondere für Gefahrgüter wie z.B. chemische Stoffe, wobei das Warenladungs- und -transportsystem versehen ist mit
- einer Palette zur Abstützung der Waren,
- einen erfindungsgemäßen Plattenelement zum Aufliegen auf der der Palette abgewandte Oberseite der Waren und
- Spannbändern zum Umspannen der Palette und des Plattenelements mit den zwischen diesen angeordneten Waren.

Das erfindungsgemäße Warenladungs- und -transportsystem ist mit einer Palette (wie z.B. einer Holzpalette) versehen, auf die die zu sichernden Waren aufgesetzt werden. Um die Haftreibung zwischen den Waren und der Palette zu erhöhen, ist es zweckmäßig, eine Zwischenlage zwischen den Waren und der Palette anzuordnen, wobei mindestens eine der beiden/vorzugsweise beide Seiten der Zwischenlage rutschhemmend beschichtet ist/sind. Zur Ladungs- und Transportsicherung der Waren wird ein erfindungsgemäßes Plattenelement mit seiner rutschhemmend beschichteten Seite auf der der Palette abgewandten Oberseite der Waren aufgelegt. Schließlich werden die Platte und das Plattenelement mit den zwischen diesen angeordneten Waren von mindestens zwei kreuzenden Spannbändern befestigt.

Die Erfindung wird nachfolgend anhand eines Ausführungsbeispiels und unter Bezugnahme auf die Zeichnung näher erläutert. Im Einzelnen zeigen dabei:
- Fig. 1: eine perspektivische Darstellung eines Warenladungs- und -transportsystems,
- Fig. 2: eine perspektivische Darstellung eines Winkelleistenelements aus Pappmaterial mit einer zentralen Wabenschicht und rutschhemmend beschichteten Abdecklagen, wie es beim Warenladungs- und -transportsystem gemäß Fig. 1 Verwendung finden kann,
- Fig. 3: eine Explosionsdarstellung eines Plattenelements eines Warenladungs- und -transportsystems,
- Fig. 4: eine perspektivische Darstellung eines Warenladungs- und -transportsystem mit dem Plattenelement und zu sichernden Waren und
- Fig. 5: eine perspektivische Darstellung eines Warenladungs- und -transportsystem mit mehreren übereinander gestapelten Paletten mit an diesen gesicherten Waren.

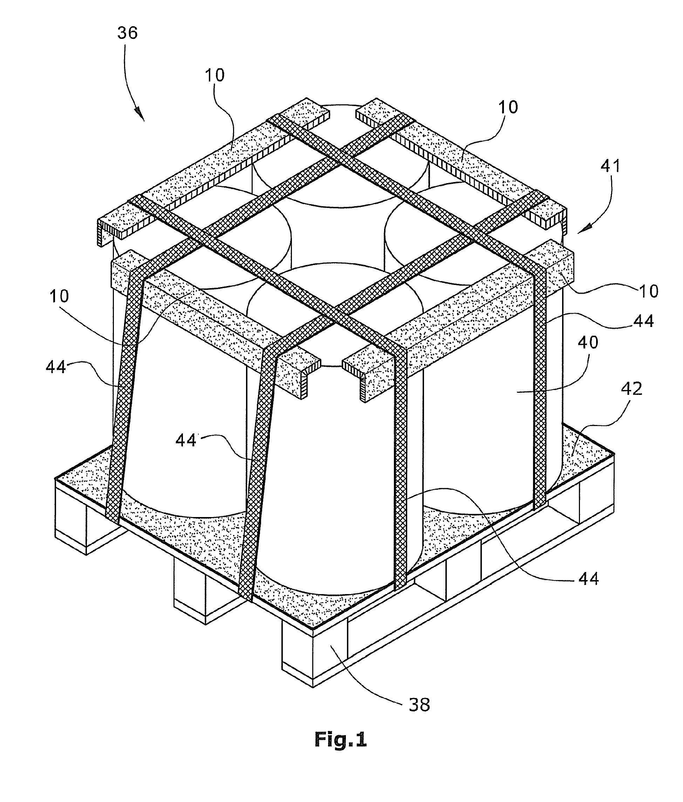

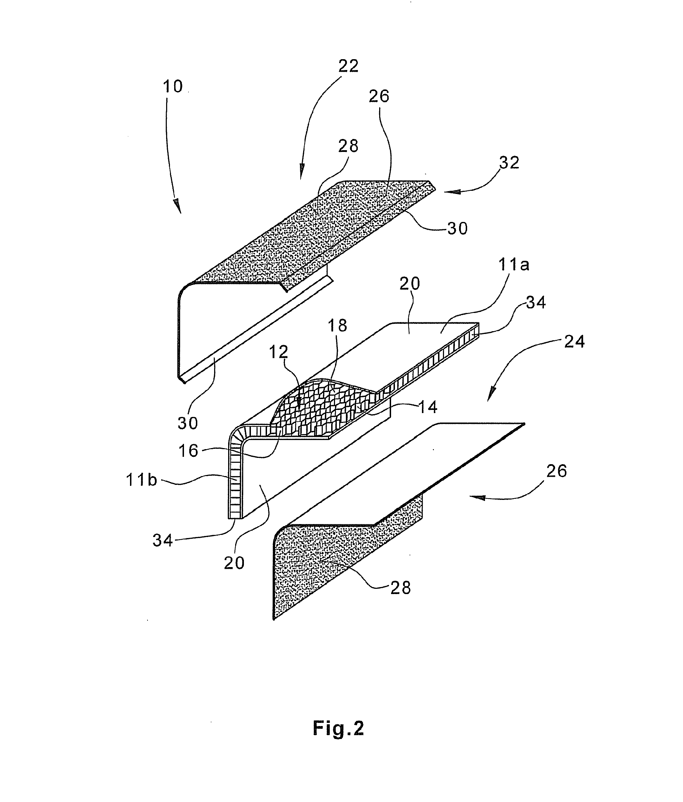

In Fig. 1 ist eine perspektivische Darstellung eines Warenladungs- und -transportsystem 36 gezeigt. Das Warenladungs- und -transportsystem 36 weist beispielsweise eine Holzpalette als Tragplatte 38 auf. Die zu sichernde Ware 40 (z.B. Fässer) wird auf die Tragplatte 38 abgesetzt. Um die Haftreibung zwischen der Ware 40 und der Tragplatte 38 zu erhöhen, kann zwischen diesen eine rutschhemmend beschichtete Zwischenlage 42 angeordnet sein. An den oberen Außenrändern 41 der Ware liegen Winkelleistenelemente 10 aus mehrschichtigem Pappmaterial an, die zumindest auf ihrer Innenseite eine rutschhemmende Beschichtung aufweisen (siehe die Fig. 2 und die nachfolgende Beschreibung). Durch Spannbänder 44 sind die Tragplatten 38, die Winkelleistenelemente 10 und die zwischen diesen angeordnete Ware 40 verzurrt. Die Haftreibung zwischen der Ware 40 und den Winkelleistenelementen 10 sowie den Spannbändern 44 und den Winkelleistenelementen 10 ist infolge von Antirutschpappen an den Innen- und Außenseiten der Winkelleistenelemente 10 erhöht, so dass die Ware 40 gegen ein Verrutschen bei ihrer Handhabung und während ihres Transports gesichert ist.

Wie in Fig. 2 gezeigt, weist das Winkelleistenelement 10 zwei Schenkel 11a,11b und eine Wabenschicht 12 auf, die aus Pappe hergestellt ist. Die Wabenschicht 12 ist mit mehreren, im Wesentlichen gewellten Wabenwänden 14 versehen. Um die Waben 16 zu bilden, sind die Wabenwände 14 nebeneinander angeordnet, wobei jeweils benachbarte Wabenwände 14 untereinander verbunden sind. Mehrere derartige Waben 16 bilden eine rechteckige Wabenschicht 12, die zwei gegenüberliegende Hauptseiten ausweist. Jede Wabe 16 ist zu den beiden einander gegenüberliegenden Hauptseiten offen. Zur Abdeckung der Öffnungen 18 der Waben 16 werden die beiden Hauptseiten der Wabenschicht 12 von einer außenliegenden oberen und einer innenliegenden unteren Abdecklage 20 aus Pappe abgedeckt. Die Abdecklagen 20 können beispielsweise durch Kleben auf den Hauptseiten der Wabenschicht 12 befestigt werden.

Ferner sind in Fig. 2 zwei beispielsweise als Antirutschpappen 22 und 24 ausgebildete Traglagen 26 mit rutschhemmender und in diesem Ausführungsbeispiel wasserdichter Beschichtung 28 gezeigt, die auf der außenliegenden bzw. der innenliegenden Abdecklage 20 fixiert sind (z.B. durch Verkleben). Diese Abdecklagen 20 bilden die Außenseite und die Innenseite des Winkelleistenelements. Die Fläche der auf der unteren Abdecklage 20 fixierten Antirutschpappe 24 ist so groß wie die Fläche der unteren Abdecklage 20. Die andere rechteckige Antirutschpappe 22 weist an jeder Seite eine überstehende Überstandslasche 30 auf. Die zwei Überstandslaschen 30 der Antirutschpappe 22 lassen sich zur Bildung von Schutzlagen 32 umbiegen, so dass zwei Seitenränder 34 der Wabenschicht 12 abgedeckt und somit vor dem Eindringen von Flüssigkeiten geschützt sind. Die Befestigung der beiden Antirutschpappen 22 und 24 auf den Abdecklagen 20 sowie der Überstandslaschen 30 auf den Seitenrändern 34 kann beispielsweise durch Kleben erfolgen. Damit ist die Wabenschicht 12 des Winkelleistenelements 10 allseitig geschlossen, wobei seine Außen- und Innenseiten vollständig rutschhemmend beschichtet sind. Alternativ können sich die Überstandslaschen 30 auch erst dann an die Seitenränder 34 der Wabenschicht 12 anlegen (ohne verklebt zu sein), wenn das Winkelleistenelement 10 so, wie in Fig. 1 gezeigt, bestimmungsgemäß eingesetzt wird.

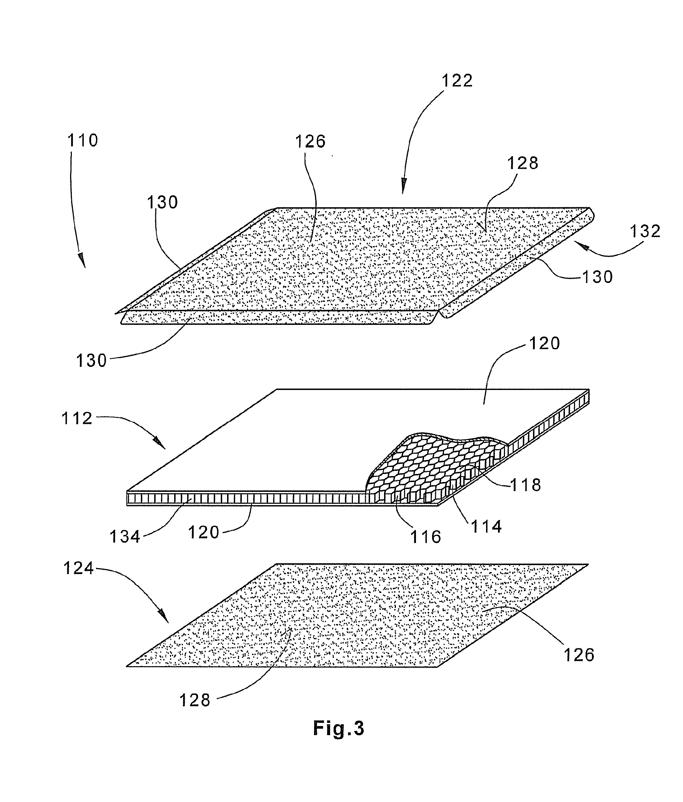

Wie in Fig. 3 gezeigt, weist ein Plattenelement 100 eine Wabenschicht 120 auf, die aus Pappe hergestellt ist. Die Wabenschicht 120 ist mit mehreren, im wesentlichen gewellten Wabenwänden 140 versehen. Um die Waben 160 zu bilden, sind die Wabenwände 140 nebeneinander angeordnet, wobei jeweils benachbarte Wabenwände 140 untereinander verbunden sind. Mehrere derartige Waben 160 bilden eine rechteckige Wabenschicht 120, die zwei gegenüberliegende Hauptseiten ausweist. Jede Wabe 160 ist zu den beiden einander gegenüberliegenden Hauptseiten offen. Zur Abdeckung die Öffnungen 180 der Waben 160 werden die beiden Hauptseiten der Wabenschicht 120 von einer oberen und einer unteren Abdecklage 200 aus Pappe abgedeckt. Die Abdecklagen 200 können beispielsweise durch Kleben auf den Hauptseiten der Wabenschicht 120 befestigt werden.

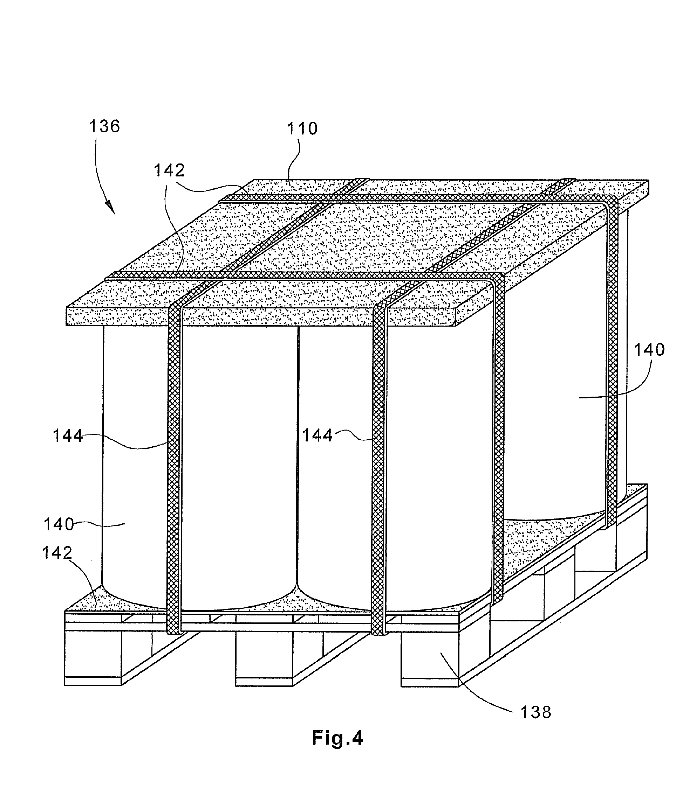

Ferner sind in Fig. 3 zwei beispielsweise als Antirutschpappen 220 und 240 ausgebildete Traglagen 260 mit rutschhemmender und in diesem Ausführungsbeispiel wasserdichter Beschichtung 280 gezeigt, die auf der oberen bzw. der unteren Abdecklage 200 fixiert sind (z.B. durch Verkleben). Die Fläche der auf der unteren Abdecklage 200 fixierten Antirutschpappe 240 ist so groß wie die Fläche der unteren Abdecklage 200. Die andere rechteckige Antirutschpappe 220 weist an jeder Seite eine überstehende Überstandslasche 300 auf. Die vier Überstandslaschen 300 der Antirutschpappe 220 lassen sich zur Bildung von Schutzlagen 320 umbiegen, so dass die Seitenränder 340 der Wabenschicht 120 abgedeckt und somit vor dem Eindringen von Flüssigkeiten geschützt sind. Die Befestigung der beiden Antirutschpappen 220 und 240 auf den Abdecklagen 200 sowie der Überstandslaschen 300 auf den Seitenrändern 340 kann beispielsweise durch Kleben erfolgen. Damit ist die Wabenschicht 120 des Plattenelements 100 allseitig geschlossen, wobei seine Außenseite vollständig rutschhemmend beschichtet ist. Alternativ können sich die Überstandslaschen 300 auch erst dann an die Seitenränder 340 der Wabenschicht 120 anlegen (ohne verklebt zu sein), wenn das Plattenelement 100 so, wie in Fig. 4 gezeigt, bestimmungsgemäß eingesehen wird.

In Fig. 4 ist eine perspektivische Darstellung eines Warenladungs- und -transportsystem 360 gezeigt. Das Warenladungs- und -transportsystem 360 weist beispielsweise eine Holzpalette 380 auf. Die zu sichernden Waren 400 (z.B. Fässer) werden auf die Holzpalette 380 aufgesetzt. Um die Haftreibung zwischen den Waren 400 und der Palette 380 zu erhöhen, ist zwischen diesen eine rutschhemmend beschichtete Zwischenlage 420 angeordnet. Das erfindungsgemäße Plattenelement 100 wird auf die der Holzpalette 380 abgewandte Oberseite der Waren 400 aufgelegt. Durch Spannbändern 440 sind die Holzpalette 380, das Plattenelement 100 und die zwischen diesen angeordneten Waren 400 verzurrt. Die Haftreibung zwischen den Waren 400 und dem Plattenelement 100 sowie den Spannbändern 440 und dem Plattenelement 100 ist infolge der Antirutschpappen 220, 240 erhöht, so dass die Waren 400 gegen ein Verrutschen während der Handhabung und des Transports der Waren 400 gesichert sind.

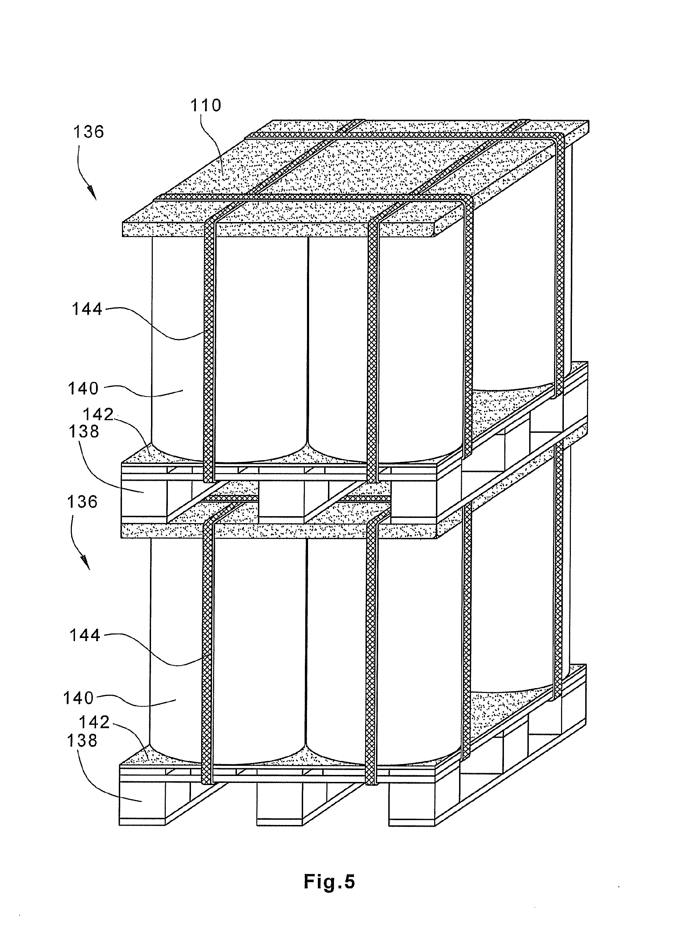

Mehrere Paletten 380 des Warenladungs- und -transportsystems 360 mit von diesen gesicherten Waren 400 können übereinander gestapelten werden. In Fig. 5 sind beispielsweise zwei übereinander gestapelte Paletten 380 mit auf diesen gesicherten Waren 400 gezeigt. Bei dieser Ausgestaltung sollten die Oberseiten der Plattenelemente 100 rutschhemmend beschichtet sein. Dadurch wird die Haftreibung zwischen der Oberseite des Plattenelements 100 und der Unterseite der aufliegenden Holzpalette 380 erhöht, so dass die übereinander gestapelten Palette 380 mit den Waren 400 gegen Verrutschen gesichert sind.

### BEZUGSZEICHENLISTE

- 10: Winkelleistenelement
- 12: Wabenschicht
- 14: Wabenwand der Wabenschicht
- 16: Wabe der Wabenschicht
- 18: Wabenöffnung
- 20: Abdecklage
- 22: außenliegende Antirutschpappe
- 24: innenliegende Antirutschpappe
- 26: Traglage
- 28: rutschhemmende Beschichtung
- 30: Überstandslasche
- 32: Schutzlage
- 34: Seitenränder der Wabenschicht
- 36: Warenladungs- und transportsystem
- 38: Tragplatte
- 40: Ware
- 41: oberer Außenrand der Ware
- 42: Zwischenlage
- 44: Spannbänder
- 100: Plattenelement
- 120: Wabenschicht
- 140: Wabenwand der Wabenschicht
- 160: Wabe der Wabenschicht
- 180: Wabenöffnung
- 200: Abdecklage
- 220: obere Antirutschpappe
- 240: untere Antirutschpappe
- 260: Traglage
- 280: rutschhemmende Beschichtung
- 300: Überstandslasche
- 320: Schutzlage
- 340: Seitenränder der Wabenschicht
- 360: Warenladungs- und -transportsystem
- 380: Palette
- 400: Waren
- 420: Zwischenlage
- 440: Spannbänder

## Patentansprüche

1. Warenladungs- und -transportsystem, insbesondere für Gefahrgutfässer für z.B. chemikalische Stoffe, mit
- einer Tragplatte (38) zur Abstützung von zu transportierender Ware (40),
- Pappmaterial aufweisenden Winkelleistenelementen (10) zur Anordnung an der Tragplatte (38) abgewandten oberen Außenrändern (41) der Ware (40) und
- Spannbändern (44) zum Spannen um die Tragplatte (38), die Winkelleistenelemente und die zwischen beiden angeordnete Ware (40).

2. Warenladungs- und -transportsystem nach Anspruch 1, **dadurch gekennzeichnet, dass** die Winkelleistenelemente (10) im Querschnitt betrachtet winklig zueinander verlaufende und miteinander verbundene Schenkel (11a,11b) aufweisen und dass jeder Schenkel (11a,11b) versehen ist mit
- mindestens einer Wabenschicht (12) aus Pappmaterial, die mehrere, nebeneinander angeordnete und im Wesentlichen gewellte Wabenwände (14) aufweist,
- wobei jeweils benachbarte Wabenwände (14) untereinander verbunden sind und zwischen sich Waben (16) bilden, welche zu zwei einander gegenüberliegenden Hauptseiten der Wabenschicht (12) offen sind,
- einer außenliegenden und einer innenliegenden Abdecklage (20) aus Pappmaterial,
- wobei die Abdecklagen (20) auf den Hauptseiten der Wabenschicht (12) angeordnet sind, und
- einer rutschhemmenden Beschichtung (28), die auf mindestens einer der beiden Abdecklagen (20) angeordnet ist.

3. Warenladungs- und -transportsystem nach Anspruch 2, **dadurch gekennzeichnet, dass** jede Abdecklage (20) auf ihrer Außenseite rutschhemmend beschichtet ist.

4. Warenladungs- und -transportsystem nach Anspruch 1 oder 2, **dadurch gekennzeichnet, dass** die rutschhemmende Beschichtung (28) direkt auf der Außenseite der Abdecklage (20) angebracht ist oder dass die rutschhemmende Beschichtung (28) auf einer Traglage (26) aus Pappmaterial aufgebracht ist, die auf der Außenseite mindestens einer der Abdecklagen (20) fixiert ist.

5. Warenladungs- und -transportsystem nach einem der Ansprüche 2 bis 4, **dadurch gekennzeichnet, dass** die Seitenränder (34) der Wabenschicht (12) durch Schutzlagen (32) abdeckbar sind, wobei die Schutzlagen (32) als Überstandslaschen (30) mindestens einer der Abdecklagen (20) ausführbar sind.

6. Warenladungs- und -transportsystem nach den Ansprüchen 4 und 5 sowie ggf. einem weiteren der vorhergehenden Ansprüche, **dadurch gekennzeichnet, dass** die Überstandslaschen (30) seitlich von mindestens einer der Traglagen (26) abstehen.

7. Warenladungs- und -transportsystem nach einem der Ansprüche 2 bis 6, **dadurch gekennzeichnet, dass** zwischen den Abdecklagen (20) eine oder mehrere Wabenschichten (12) angeordnet sind.

8. Warenladungs- und -transportsystem nach einem der Ansprüche 2 bis 7, **dadurch gekennzeichnet, dass** zwischen mindestens einer der Abdecklagen (20) und der rutschhemmenden Beschichtung (28) eine nachgiebige Schicht aus Pappmaterial angeordnet ist.

9. Warenladungs- und -transportsystem nach einem der Ansprüche 1 bis 8, **dadurch gekennzeichnet, dass** die Winkelelemente (10) durch Knicken oder Umbiegen einer Platte mit Schichtenaufbau der Schenkel eines Winkelelements (10) gebildet sind, wobei das Knicken oder Umbiegen durch Ausbilden einer Nut in zumindest einer Seite der Platte erleichterbar ist und wobei die Nut zumindest bis in den mittleren Bereich der Dicke der Wabenschicht hineinragt.

10. Warenladungs- und -transportsystem nach einem der Ansprüche 1 bis 9, **dadurch gekennzeichnet, dass** zwischen der Ware (40) und der Tragplatte (38) zur Erhöhung der Haftreibung eine Zwischenlage (42) aus insbesondere Pappmaterial angeordnet ist, wobei mindestens eine der beiden Seiten der Zwischenlage (42) rutschhemmend beschichtet ist.

11. Warenladungs- und -transportsystem nach einem der Ansprüche 1 bis 10, **dadurch gekennzeichnet, dass** die Winkelleistenelemente (10) Randbereiche eines Plattenelements (100) bilden, das versehen ist mit
- mindestens einer Wabenschicht (120) aus Papiermaterial, die mehrere, nebeneinander angeordnete, im wesentlichen gewellte Wabenwände (140) aufweist,
- wobei jeweils benachbarte Wabenwände (140) untereinander verbunden sind und zwischen sich Waben (160) bilden, welche zu zwei einander gegenüberliegenden Hauptseiten der Wabenschicht (120) offen sind,
- einer oberen und einer unteren Abdecklage (200) aus Papiermaterial,
- wobei die Abdecklagen (200) auf den Hauptseiten der Wabenschicht (120) angeordnet sind, und
- einer rutschhemmenden Beschichtung (280), die auf mindestens einer der beiden Abdecklagen (120) angeordnet ist.

12. Warenladungs- und -transportsystem nach Anspruch 11, **dadurch gekennzeichnet, dass** jede Abdecklage (200) auf ihrer Außenseite rutschhemmend beschichtet ist, wobei die rutschhemmende Beschichtung (280) insbesondere direkt auf der Außenseite der Abdecklage (200) oder vornehmlich auf einer Traglage (260) aus Papiermaterial aufgebracht ist, die auf der Außenseite mindestens einer der Abdecklagen (200) fixiert ist.

13. Warenladungs- und -transportsystem nach Anspruch 11 oder 12, **dadurch gekennzeichnet, dass** die Seitenränder (340) der Wabenschicht (120) durch Schutzlagen (320) abdeckbar sind, wobei die Schutzlagen (320) insbesondere als Überstandslaschen (300) der mindestens einer Abdecklagen (200) ausgebildet sind, welche zweckmäßigerweise seitlich von mindestens einer der Traglagen (260) abstehen.

14. Warenladungs- und -transportsystem nach einem der Ansprüche 11 bis 13, **dadurch gekennzeichnet, dass** zwischen den Abdecklagen (200) eine oder mehrere Wabenschichten (120) und/oder zwischen mindestens einer der Abdecklagen (200) und rutschhemmender Beschichtung (280) eine nachgiebige Schicht aus Papiermaterial angeordnet sind/ist.

15. Warenladungs- und -transportsystem (360), insbesondere für Gefahrgüter wie z.B. chemische Stoffe, mit
- einer Palette (380) zur Abstützung der Waren (400),
- einen Plattenelement (100) nach einem der vorhergehenden Ansprüche zum Aufliegen auf der der Palette (380) abgewandte Oberseite der Waren (400) und
- Spannbändern (440) zum Umspannen der Palette (380) und des Plattenelements (100) mit den zwischen diesen angeordneten Waren (400),
- wobei zwischen den Waren (400) und der Palette (380) zur Erhöhung der Haftreibung eine Zwischenlage (420) positionierbar und mindestens eine der beiden Seiten der Zwischenlage (420) insbesondere rutschhemmend beschichtet ist.
